# EUROPÄISCHE PATENTSCHRIFT

(11) **EP 1 034 095 B1**
(45) Veröffentlichungstag und Bekanntmachung des Hinweises auf die Patenterteilung: **05.03.2008**
(21) Anmeldenummer: 99924741.4
(22) Anmeldetag: 01.04.1999
(51) Int. Cl.: B60R 16/02

(54) **VERFAHREN UND VORRICHTUNG ZUR ENERGIEVERTEILUNG IN EINEM KRAFTFAHRZEUG**
METHOD AND DEVICE FOR ENERGY DISTRIBUTION IN A MOTOR VEHICLE
PROCEDE ET DISPOSITIF DE DISTRIBUTION D'ENERGIE DANS UN VEHICULE A MOTEUR

(30) Priorität: 30.06.1998 DE 19829150
(43) Veröffentlichungstag der Anmeldung: 13.09.2000
(73) Patentinhaber: ROBERT BOSCH GMBH, 70442 Stuttgart (DE)
(72) Erfinder: BERTRAM, Torsten, D-40547 Düsseldorf (DE); SCHMUCKER, Clemens, D-71732 Tamm (DE); MAIER-LANDGREBE, Rolf, D-71394 Kernen (DE); BAUMANN, Torsten, D-74252 Massenbachhausen (DE)
(86) Internationale Anmeldenummer: PCT/DE1999/000987
(87) Internationale Veröffentlichungsnummer: WO 2000/001558

(56) Entgegenhaltungen:
- WO-A1-99/21261
- DE-A- 4 111 023
- DE-A- 19 709 317
- US-A- 5 351 776
- KIENCKE U ET AL: "OPEN SYSTEMS AND INTERFACES FOR DISTRIBUTED ELECTRONICS IN CARS (OSEK)" SAE TECHNICAL PAPER SERIES, 1. Januar 1995 (1995-01-01), Seiten 71-78, XP002062366
- KIENCKE U ET AL: "OSEK/VDX - APPROACHING AN INDUSTRY STANDARD FOR OPEN-ENDED ARCHITECTURES FOR DISTRIBUTED CONTROL UNITS IN VEHICLES" INGENIEURS DE L'AUTOMOBILE, Nr. 720, 1. April 1998 (1998-04-01), Seiten 42-45, XP000765128 ISSN: 0020-1200
- BERTRAM T. ET AL: 'CARTRONIC - An Open Architecture for Networking the Control Systems of an Automobile' SAE TECHNICAL PAPER SERIES Bd. 10602, Nr. 980200, 23 Februar 1998 - 26 Februar 1998, 400 COMMONWEALTH DRIVE, WARRENDALE, PA 15096-0001 US, Seiten 1 - 9, XP000865548

## Beschreibung

### Stand der Technik

Die Erfindung betrifft ein Verfahren und ein System zur Energieverteilung in einem Kraftfahrzeug.

Bei bekannten Steuerungen von Kraftfahrzeugkomponenten ist die Software nach Funktionen strukturiert. Dabei besteht die Möglichkeit, daß verschiedene Funktionen auf die gleichen Stellglieder zugreifen. Eine Austauschbarkeit von Softwareteilen ist nur mit erheblichem Aufwand möglich. Eine modulare Entwicklung wird nicht unterstützt.

Um diese Situation zu verbessern, wird beispielsweise in der DE-A-41 11 023 (US-Patent 5,351,776) ein Steuerverfahren bzw. eine Steuervorrichtung beschrieben, die eine Steuerung des Gesamtfahrzeugs erlaubt und die eine hierarchische Auftragsstruktur für die Steueraufgaben aufweist. Die dort beschriebe Steuerungsstruktur umfaßt Koordinationselemente, welche einen aus einer höheren Hierarchieebene ausgehenden Befehl in Befehle für Elemente einer nachgeordneten Hierarchieebene umsetzen. Die Inhalte der von oben nach unten in der Hierarchiestruktur weitergegebenen Befehle stellen physikalische Größen dar, die die Schnittstellen zwischen den einzelnen Hierarchieebenen bestimmen. Die beschriebenen Schnittstellen orientieren sich dabei an den physikalischen Gegebenheiten der Fahrzeugbewegung, insbesondere des Antriebsstrangs und der Bremse. Eine darüber hinaus gehende Betrachtung einer Fahrzeugsteuerung unter Berücksichtigung der Energieverteilung im Bordnetz wird nicht beschrieben.

Die installierte elektrische Leistung kann in einigen Fällen in der Zukunft 15kW übersteigen. Im "worst case" sind 7kW elektrische Dauerleistung möglich (entspricht der denkbaren Verbraucherkombination mit maximaler Leistung der einzelnen Verbraucher im Normalbetrieb). Durch zusätzliche Betätigung von Kurzzeitverbrauchern kann dieser Wert auf über 10kW steigen. Bei gleichzeitigem Einschalten von Elektromotoren und/oder Glühlampen, entsteht ein zusätzlicher nicht vernachlässigbarer Leistungspeak, verursacht durch Anlaufströme.

Diese Zahlenwerte verdeutlichen die Anforderungen an ein zukünftiges Bordnetz sowie an ein Steuersystem für ein solches Bordnetz. Batterie(n) und Generator sind so auszulegen, daß das Fahrzeug jederzeit verfügbar ist. Dies bedeutet, daß die elektrische Leistungsbilanz im Mittel ausgeglichen sein muß, mit der Randbedingung, daß der Batterieladezustand einen kritischen Wert nicht unterschreiten darf, um jederzeit einen Motorstart zu ermöglichen. Die spezifizierten Spannungsgrenzen dürfen nicht unter- bzw. überschritten werden, um Verbraucherausfälle (z.B. Steuergeräteausfall durch Unterspannung) zu vermeiden. Zukünftige Antriebskonzepte wie Start-Stop-Systeme oder Schwungnutzsysteme verschärfen die Anforderungen an das Bordnetz weiter, da bei Motorstop ein motorgekoppelter Generator keine Leistung erzeugt.

Die Erzeugung von elektrischer Leistung hat auch Auswirkungen auf den Kraftstoffbedarf eines Fahrzeugs. Die Erzeugung von 100 W elektrischer Leistung erhöht den Kraftstoffbedarf um ca. 0,171/100 km. Eine Gewichtserhöhung des Fahrzeugs um 50 kg verursacht den gleichen Mehrverbrauch. Eine Reduzierung des Kraftstoffbedarfs bei gleichzeitiger deutlicher Erhöhung der elektrischen Leistung ist nur möglich, wenn einerseits der Wirkungsgrad der Leistungserzeugung, -verteilung und - nutzung verbessert wird und andererseits das Zusammenspiel von Triebstrang und Bordnetz optimiert wird (Gesamtwirkungsgrad).

Eine Verbesserung des Gesamtwirkungsgrads ist mit Hilfe eines Bordnetzmanagements, wie in SAE 980200, Bertram, T. et al, mit dem Titel "CARTRONIC-An Open Architecture for Networking the Controlsystems of an Automobile vom 23.- 26.02.1998 gezeigt (nächstkommender, vorveröffentlichter Stand der Technik), erreichbar, das die Steuerung der Bordnetzkomponenten (z. B. Generator, Batterie(n), Verbraucher, Spannungsregler, DC/DC-Wandler) koordiniert. Ebenso können durch ein solches Bordnetzmanagement die worst-case Anforderungen an Batterie und Generator reduziert werden (z. B. Startfähigkeit bei -25°C). Diese selten auftretende Fälle können durch Maßnahmen des Bordnetzmanagements gemeistert werden (z.B. durch Anhebung des Drehzahlniveaus des Antriebs oder Reduktion der Verbraueherleistung). Dabei zeigt das SAE-Paper 980200 ein Bordnetzmanagement in sehr allgemeiner Form und von hohem Abstraktionsgrad ohne konkrete Umsetzung. Auf die Aufteilung der Kommunikation in dem ansonsten streng hierarchischen konzept mit übergeordneten Koordinator und Quellen und/oder Verbrauchern in Abfragen, Antworten und Aufträge wird eingegagen.

In der nicht vorveröffentlichten deutschen Patentanmeldung 1 97 45 849.1 vom 16.10.1997 die die Prioritätsanmeldung zur WO 99/21261 A1 darstellt und als EP 0 944 946 A in die regionale Phase eingetreten ist (Stand der Technik nach Artikel 54(3) und (4) EPÜ), ist ein Bordnetzmanagement dargestellt. Die Energieverteilung wird mit Hilfe einer Steuereinrichtung, die als Bordnetzmanager arbeitet, realisiert. Der Steuereinheit werden die erforderlichen Informationen zugeführt, aus denen sie eine Strategie für die Steuerung der Komponenten des Bordnetzes und der Brennkraftmaschine durchführt. Die Energieverteilung zwischen Bordnetz und Brennkraftmaschine erfolgt gemäß vorgebbaren Anforderungen unter Berücksichtigung der Bedingung, daß die Bordnetz-SollSpannung (U_s) innerhalb vorgebbarer Grenzen liegt. Eine konkrete Ausgestaltung des Bordnetzmanagers sowie eine Einbindung in eine hierarchische Steuerstruktur wird nicht beschrieben.

Aus der ebenfalls nicht vorveröffentlichten deutschen Patentanmeldung 1 97 09 317.5 vom 7.3.1997 die keinen Stand der Technik im Sinn des Artikels 54 EPÜ darstellt, ist das Prinzip einer hierarchischen Grundstruktur eines Fahrzeuggesamtsystems bekannt. Dort ist ein Fahrzeugkoordinator Auftraggeber für die Komponenten Antrieb (Quelle mechanischer Leistung), Fahrzeugbewegung, Karosserie und Innenraum und Elektrisches Bordnetz (Quelle elektrischer Leistung). Die Kommunikation zwischen den einzelnen Komponenten dieser Struktur erfolgt nur zwischen der übergeordneten Komponente und den dieser zugewiesenen Komponenten im Rahmen fest vorgegebener Kommunikationsbeziehungen. Diese sind der Auftrag, der grundsätzlich von einer Komponente in einer höheren an eine Komponente in einer niedrigeren Hierarchieebene gegeben wird und von der beauftragten Komponente erfüllt werden muß, die Anforderung, die auch von einer Komponente in einer niedrigeren an eine Komponente in einer höheren Hierarchieebene gegeben wird und die von der angeforderten Komponente erfüllt werden sollte, und die Abfrage, bei der von der gefragten Komponente eine Antwort an die fragenden Komponente erwartet wird. Im Rahmen dieser vorgegebenen Kommunikationsbeziehungen zwi-schen den Komponenten findet die Steuerung des Fahrzeugs statt. Es werden zur Steuerung des Fahrzeugs fest vorgegebene physikalische Größen übermittelt, die definierte Schnittstellen zwischen den einzelnen Komponenten darstellen. Eine Ausgestaltung des Koordinators Elektrisches Bordnetz wird nicht gezeigt. Es ist Aufgabe der Erfindung, die konkrete Struktur eines Bordnetzmanagements anzugeben, mit dessen Hilfe die beschriebenen Forderungen erfüllt werden können und welches in eine hierarchische Steuerstruktur eingebunden ist. Die Aufgabe ist mit einem Verfahren nach Anspruch 1 bezichungsweise einem System nach Anspruch 10 gelöst. Weitere Ausgestaltungen der Erfindung sind in den abhängigen Ansprüche definiert.

### Vorteile der Erfindung

Der beschriebene Bordnetzmanager ermöglicht es, die Steuerung des elektrischen Bordnetzes und damit die Steuerung der Energieverteilung in eine hierarchische Gesamtfahrzeugstruktur einzubetten. Dadurch wird eine größere Übersichtlichkeit des Gesamtsystems und des Steuersystems zur Energieverteilung erreicht und eine modulare Entwicklung von Software ermöglicht. Dies deshalb, weil eine objektorientierte Struktur des Bordnetzmanagers entsprechend der Struktur des Gesamtsystems vorgegeben ist.

Besonders vorteilhaft ist, daß die Struktur des elektrischen Bordnetzes bzw. des Bordnetzmanagers besonders einfach ist. Die Schnittstellen zwischen den einzelnen Komponenten und die ausgetauschten Größen sind rein logischer Natur, d.h. hardware- und realisierungsunabhängig (z.B. Drehzahl, Leistung, Moment, Spannung, etc.). Dadurch ergeben sich als Vorteile die Wiederverwendbarkeit von Software, eine leichte Erweiterbarkeit, eine gute Übersichtlichkeit und eine leichte Applizierbarkeit.

Vorteilhaft ist ferner, daß der unten näher beschriebene Bordnetzkoordinator das Zusammenspiel von Generator, Spannungsregler, elektrischen Verbrauchern, Batterien und even-tuell vorhandenen DC/DC-Wandlern koordiniert. Eine Koordination mit dem Triebsstrang wird im Stand der Technik von einer dem Bordnetzkoordinator übergeordneten Komponente (Fahrzeugkoordinator) bereitgestellt. Erfindungsgemäß ist nun ein Bordnetzmanager vorgesehen, der zusätzlich die Aufgabe der Koordination mit dem Triebstrang übernimmt der übergeordneten Komponente übernimmt und so den Triebsstrang mit berücksichtigt. Es wird eine geeignete Strategie zur Erzeugung, Verteilung, Speicherung und Nutzung der elektrischen Leistung festgelegt. Dadurch wird die Fahrzeugverfügbarkeit erhöht, weil die Ladebilanz sichergestellt ist, die Bordnetzspannung im spezifizierten Bereich, dynamisch und statisch, gehalten wird, das dynamische Zusammenspiel von Bordnetz und Antrieb verbessert wird und die Lebensdauer der Batterie verlängert wird. Dabei wird als Randbedingung ein möglichst minimaler Kraftstoffbedarf berücksichtigt.

Durch die nachfolgend beschriebenen Strukturen mit einem übergeordneten Block, der die untergeordnete Teilsysteme koordiniert, werden die Teilsysteme optimal koordiniert. Die Struktur ermöglicht ein übergeordnetes Energiemanagement.

### Zeichnung

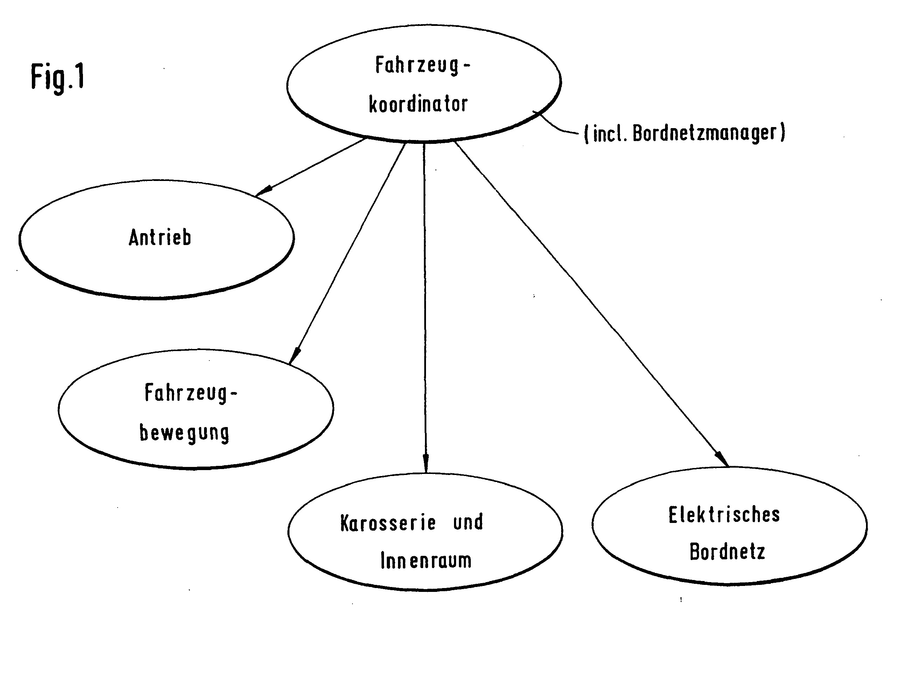

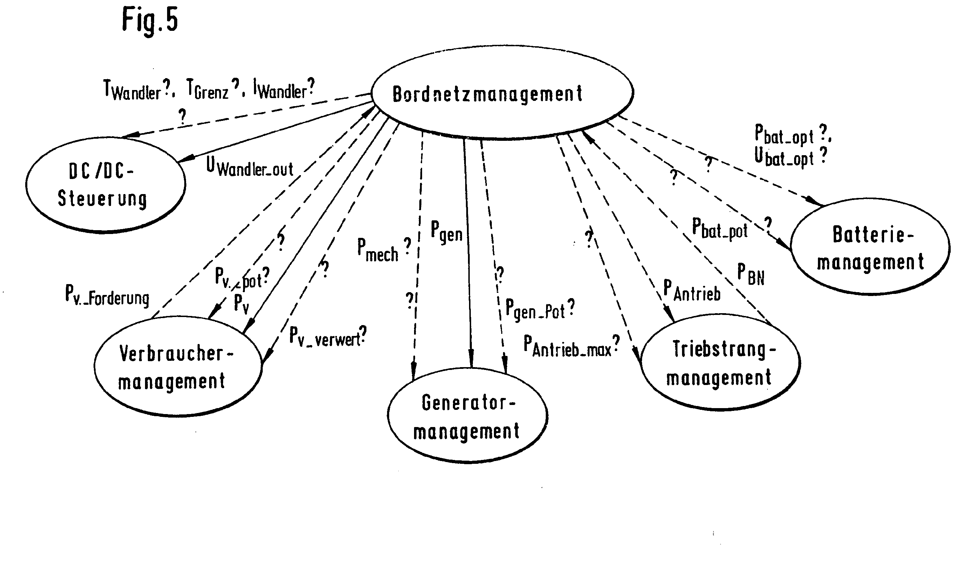

Ausführungsbeispiele der Erfindung sind anhand der Figuren 1 bis 4 erläutert und in der Figur 5 der Zeichnung dargestellt und werden in der nachfolgenden Beschreibung näher erläutert.

### Beschreibung von Ausführungsbeispielen

Figur 1 zeigt das aus dem eingangs genannten Stand der Technik bekannte Prinzip einer hierarchischen Grundstruktur eines Fahrzeuggesamtsystems. Ein Fahrzeugkoordinator ist Auftraggeber für die Komponenten Antrieb, Fahrzeugbewegung, Karosserie und Innenraum und Elektrisches Bordnetz. Im folgenden wird die Komponente Elektrisches Bordnetz und die zugehörigen Schnittstellen zum Fahrzeugkoordinator näher beschrieben. Die einzelnen Komponenten können je nach Ausführungsbeispiel als einzelne Steuergeräte oder in einem Steuergerät als einzelne Softwareblöcke oder als Mischung die Ausgestaltungen realisiert werden.

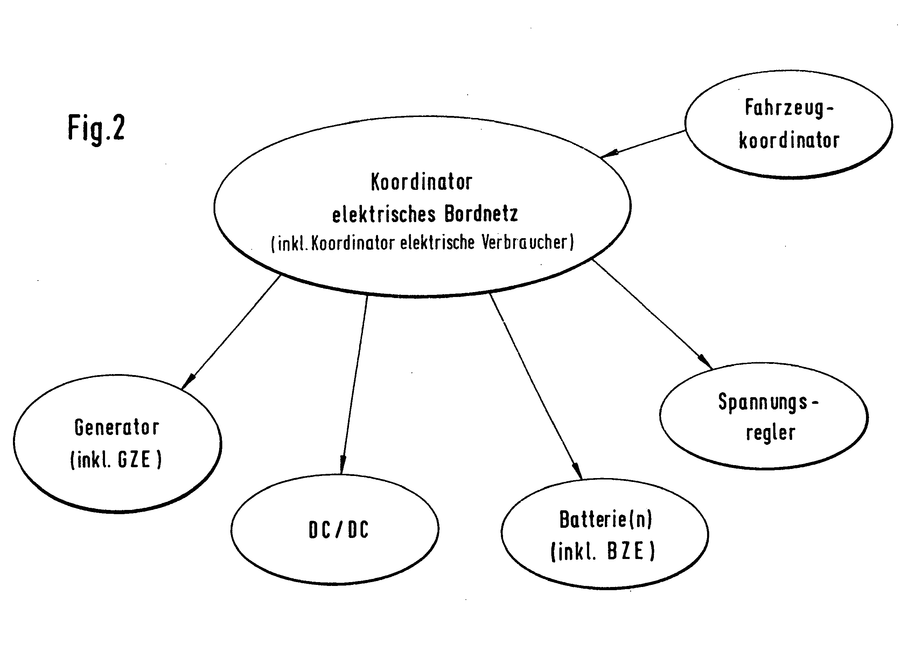

Figur 2 zeigt das Prinzip der Verfeinerung der Komponente Elektrisches Bordnetz. Die Aufgabe des elektrischen Bordnetzes ist die Bereitstellung elektrischer Leistung für die elektrischen Verbraucher des Kraftfahrzeugs. Zusätzlich besteht die Möglichkeit, durch das Bordnetz (über den Generator) eine mechanische Leistung einzustellen, indem die Generatorerregung und damit die Aufnahme mechanischer Leistung gesteuert wird. In Sonderfällen ist sogar die Bereitstellung von mechanischer Leistung möglich, indem der Generator im motorischen Betrieb betrieben wird, in dem er mechanische Leistung abgibt. Die Einstellung der mechanischen Aufnahmeleistung des Bordnetzes dient z.B. der Warmlaufunterstützung eines Verbrennungsmotors, wobei der Antrieb ein zusätzliches Lastmoment fordert und somit die Warmlaufphase abkürzt oder zur Aufbringung eines zusätzlichen Bremsmoments, z.B. auf Anforderung der Komponente Fahrzeugbewegung. Die mechanische Leistungsabgabe des Bordnetz kann als "Boost" des Antriebs genutzt werden.

Die Bordnetzkomponenten Generator und Batterie sind zur Erfüllung der Bordnetzaufgaben unbedingt erforderlich. Dabei sind mehrere Batterien, z.B. ein Zwei-Batterienbordnetz, denkbar. Für ein übergeordnetes Bordnetzmanagement besitzen sowohl die Komponente Generator als auch die Komponente Batterie eine Zustandserkennung (GZE Generatorzustandserkennung, BZE Batteriezustandserkennung), um Angaben über das Leistungspotential machen zu können, z.B. Abschätzen des Batterieladezustandes und des Batteriealters, Abschätzung der Generatortemperatur, etc., sofern diese Daten nicht als Meßgrößen vorliegen. Bei Mehrspannungsbordnetzen sind als weitere Komponenten ein oder mehrere DC/DC-Wandler für die Spannungswandlung erforderlich.

Der Koordinator elektrisches Bordnetz steuert die Bordnetzkomponenten, d.h. er legt die Strategie fest, wie die Anforderungen des Fahrzeugkoordinators an das Bordnetz umgesetzt werden. Der Koordinator elektrische Verbraucher ist je nach Ausführung eine eigene Bordnetzkomponente oder Teil des Koordinators elektrisches Bordnetz. Seine Aufgabe ist das Sammeln der Leistungsanforderungen der der Komponente elektrisches Bordnetz zugehörigen, elektrischen Verbraucher (z.B. Heizung), das Anfordern dieser Leistung beim Fahrzeugkoordinator sowie die Leistungszuteilung an die Verbraucher.

Die Bordnetzkomponente Spannungsregler ist nicht zwingend erforderlich. Sie dient bei einem Bordnetzmanagement dazu, die Bordnetzspannung im spezifizierten Bereich zu halten, wenn der Generator an seiner Leistungsgrenze ist, d.h. den elektrischen Leistungsbedarf nicht mehr abdecken kann. Er teilt dem Bordnetzmanagement den Leistungsfehlbedarf mit (ermittelt aus der Differenz Uₛₒₗₗ - Uᵢₛₜ zwischen der Bordnetzsollspannung Uₛₒₗₗ und der Bordnetzistspannung Uᵢₛₜ). Das Bordnetzmanagement leitet daraufhin Maßnahmen ein, die den elektrischen Leistungsbedarf reduzieren (z.B. Abschalten von elektrischen Verbrauchern) oder die eine höhere elektrische Leistungserzeugung ermöglichen, wie z.B. eine Änderung der Generatordrehzahl. Der Spannungsregler kann vereinfacht als virtueller elektrischer Verbraucher mit hoher Priorität gesehen werden. Der Spannungsregler ist nicht identisch mit dem Generatorregler, der der Komponente Generator zugeordnet ist und der durch Regelung der Generatorerregung die geforderte Bordnetzspannung einstellt.

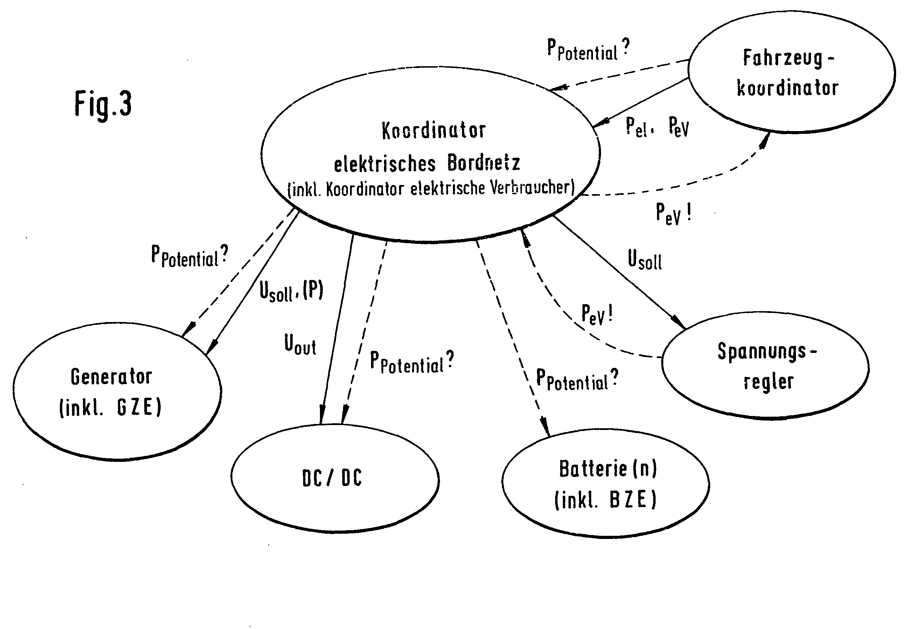

Figur 3 zeigt die Kommunikation zwischen den Komponenten für eine Anforderung nach Bereitstellung elektrischer Leistung. Der Fahrzeugkoordinator erfragt (Abfragebeziehung) vom Koordinator Bordnetz das Potential der elektrischen Leistungsbereitstellung Pₚₒₜₑₙₜᵢₐₗ, aufgeteilt auf alle vorhandenen Spannungsebenen. Die Frage wird weitergegeben an den Generator und die Batterie. Das Potential wird bei Bedarf in unterschiedlich priorisierten Teilmengen angegeben. So ist das Potential der Batterie aufgeteilt in die aus Batteriesicht wünschenswerte Batterieleistung (Lade- oder Entladeleistung), in die maximal mögliche Entladeleistung und die maximal mögliche Ladeleistung, jeweils inkl. zugehöriger Batteriespannung. Je nach Batteriezustand sind diese Leistungen priorisiert. So hat bei niedrigem Batterieladezustand die Ladung sehr hohe Priorität. Gleichzeitig fragt der Bordnetzkoordinator das Potential der DC/DC-Wandler ab (falls vorhanden). Dieses ist z B. durch die Grenztemperatur der Leistungshalbleiter begrenzt. Dieses Potential kann das Leistungspotential von Batterie und Generator begrenzen. Das elektrische Leistungspotential wird z.B. durch Auswertung eines Vollastkennfeldes ermittelt, das den Generatorausgangsstrom über der Drehzahl bei maximaler Erregung und unterschiedlichen Generatorausgangsspannnugen darstellt. Das Potential der Batterie(n) wird ermittelt, indem z.B. abgeschätzt wird, wieviel Leistung der batterie entnehmbar oder zuführbar ist bei vorgegebenen Spannungen, die aus der Bordnetzspezifikation ableitbar sind. Das Potential des DC/DC-Wandlers ist abhängig vom Layout des Wandlers und äußeren Einflüssen, z.B. Temperatur. Der Wandler kann die seiner Spezifikation entsprechende Leistung übertragen, bei hoher Bauteiletemperatur ist diese jedoch zu reduzieren. Das Potential des Wandlers kann z.B. über eine temperaturabhängige Kennlinie ermittelt werden.

Der Bordnetzkoordinator interpretiert die Potentialangaben von Batterie und Generator und beantwortet die Potentialfrage an den Fahrzeugkoordinator.

Es folgt der Auftrag (Auftragsbeziehung) nach Leistungsbereitstellung (elektrische Leistung Pₑ₁) vom Fahrzeugkoordinator an den Koordinator Bordnetz. Der Koordinator Bordnetz entscheidet (bei Abfragen nach Leistungsbereitstellung entsprechend den priorisierten Potentialabgaben) abhängig vom Batterie- und Generatorzustand über die Aufteilung des Leistungsauftrags auf die einzelnen Teilkomponenten (z.B. Batterie und Generator) und beauftragt daraufhin den Generator mit der Leistungserzeugung unter Vorgabe einer Sollspannung (U_{Soll}). Ist die Verbraucherleistung bekannt, dann entspricht U_{Soll} einer bestimmten Generatorleistung, d.h. statt U_{Soll} kann auch eine Leistung P vorgegeben werden. Ist die Verbraucherleistung nicht genau bekannt, dann stellt sich bei Leistungsvorgabe eine von der Sollspannung verschiedene Leistung ein, d.h. die Batterieleistung entspricht nicht mehr dem gewollten Wert. Bei Uₛₒₗₗ - Vorgaben sorgt der Generatorregler dafür, daß so viel Leistung erzeugt wird, daß die Spannung eingestellt wird (wenn möglich). Die sich ergebende Bordnetzspannung entscheidet über die Batterieleistung (die Batterieleistung ist nicht direkt steuerbar, sondern stellt sich gemäß der Batteriespannung ein). Gleichzeitig gibt der Bordnetzkoordinator die Ausgangsspannungen (Uₒᵤₜ) für die DC/DC-Wandler vor (Auftrag).

Der Spannungsregler erhält im Rahmen einer Auftragsbeziehung den Spannungssollwert (U_{Soll}). Diesen vergleicht er mit dem Spannungsistwert. Er fordert abhängig vom Ergebnis virtuelle elektrische Leistung (Pₑᵥ) über den Bordnetzkoordinator vom Fahrzeugkoordinator an mit dem Ziel, die Spannungsdifferenz auszugleichen (Anforderungsbeziehung).

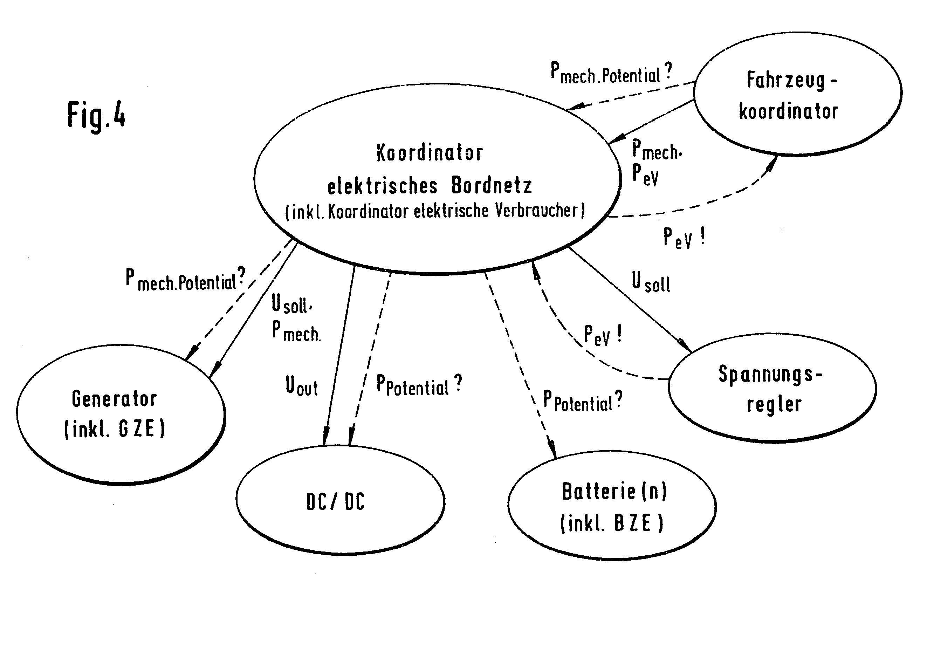

Figur 4 zeigt den Kommunikationsablauf bei Anforderung einer mechanischen Leistung (P_{mech}) des Bordnetz. Diese Leistung kann sowohl positiv (Aufnahme mechanischer Leistung) als auch negativ (Abgabe mechanischer Leistung) sein.

Der Fahrzeugkoordinator fragt das mechanische Leistungspotential (P_{mech}, _{Potential}) des elektrischen Bordnetzes ab. Der Koordinator Bordnetz fragt das mechanische Leistungspotential des Generators, das elektrische Leistungspotential der Batterie und das elektrische Leistungspotential der DC/DC-Wandler ab (Abfragebeziehungen). Das Potential der Abgabe mechanischer Leistung (erzeugbare mechanische Leistung) bei motorischem Betrieb des Generators wird berechnet aus der Drehzahl, bei der die Leistung abzugeben ist, und der Bordnetzspannung (P_{mech} = f(n, U)). Die Drehzahl wird dabei bei der Abfrage mitgeteilt (auch mehrere Werte, abhängig von zulässigen Getriebestufen). Die Antwort enthält zugleich eine Aussage über die benötigte elektrische Leistung. Das Potential der Aufnahme der mechanischen Leistung wird ermittelt aus dem Vollastkennfeld und dem Wirkungsgrad. Abhängig von der elektrischen Leistungsforderung an das Bordnetz, dem Batterie-, Generator- und Wandlerpotential bestimmt der Koordinator Bordnetz des Potential der mechanischen Leistungsbereitstellung. Dieses ist wiederum nach verschiedenen Prioritäten unterteilt. Bei einer Forderung nach Abgabe mechanischer Leistung ist das Batteriepotential die begrenzende Größe, da die Batterie die elektrische Leistung für Bordnetz und motorischen Betrieb des Generators liefern muß. Eine Forderung nach zusätzlicher Aufnahme von mechanischer Leistung bedeutet erhöhte Abgabe elektrischer Leistung. Kann diese Leistung nicht von der Batterie aufgenommen werden, ist entweder keine zusätzliche mechanische Leistungsaufnahme möglich oder es müssen zusätzliche elektrische Verbraucher eingeschaltet werden. D.h. es ist evtl. eine zusätzliche Abfrage des Generators über den Bordnetzkoordinator an den Fahrzeugkoordinator einzufügen: Potential der elektrischen Verbraucher (Pₑᵥ) (wieviel Leistung kann zusätzlich aufgenommen werden). Der Fahrzeugkoordinator beauftragt das el. Bordnetz mit der Bereitstellung der mechanischen Leistung (P_{mech}). Der Koordinator Bordnetz beauftragt den Generator, die mechanische Leistung einzustellen (Auftragsbeziehungen). Dies ist möglich durch direkte Leistungsvorgabe (P_{mech}). Diese Leistung wird z.B. vom Antrieb beim Fahrzeugkoordinator angefordert für Funktionnen wie Warmlaufunterstützung oder durch Vorgabe der Sollspannung (Uₛₒₗₗ) . P_{mech} wird vorgegeben bei einer Forderung nach Abgabe einer mechanischer Leistung, Uₛₒₗₗ bei Forderung nach Aufnahme einer mechanischer Leistung. Die Batterieleistung stellt sich abhängig von der Bordnetzspannung ein.

Die Spannungsregelung etc. läuft analog zum Fall Anforderung elektrischer Leistung ab.

Ein Ausführungsbeispiel ist in Figur 5 beschrieben, mit der diesselbe Funktionalität erreicht wird. Die Kopplung mit dem Gesamtfahrzeug findet über die Komponenten Verbrauchermanagement und Triebstrangmanagement statt. Beim Ausführungsbeispiel nach den Figuren 1 bis 4 bilden die Komponenten DC/DC-Steuerung, Generator- und Batteriemanagement das elektrische Bordnetz. Das Verbrauchermanagement ist dabei auf alle Komponenten verteilt, inklusive dem Fahrzeugteil, während das Triebstrangmanagement im Ausführungsbeispiel nach Figur 5 die Schnittstelle zur Fahrzeugbewegung und Antrieb darstellt, aber nur die bordnetzrelevanten Teile abbildet.

Der Bordnetzkoordinator im Ausführungsbeispiel der Figuren 1 bis 4 ist daher auch nicht mit dem nachfolgend beschriebenen Bordnetzmanagement identisch. Der Bordnetzkoordinator ist im Ausführungsbeispiel der Figuren 1 bis 4 Teil eines Bordnetzmanagements, welches hauptsächlich im Fahrzeugkoordinator abläuft. Während die Struktur nach den Figuren 1 bis 4 die gesamte Fahrzeugstruktur berücksichtigt, wird in Figur 5 nur der bordnetzrelevante Teil dargestellt.

Um die elektrische Leistungserzeugung und Nutzung koordinieren zu können, werden im Ausführungsbeispiel nach Figur 5 Angaben über den Generator-, Batterie-, Antriebs- und Verbraucherzustand verwendet. Entsprechend sind als Teilkomponenten Batteriemanagement, Generatormanagement, Triebstrangmanagement, Verbrauchermanagement und bei Mehrspannungsbordnetzen die Steuerung der DC/DC-Wandler angegeben.

Die Batterie ist ein Speicher für elektrische Energie. Sie kann sowohl Leistung aufnehmen als auch abgeben. Das Batteriemanagement koordiniert den Betrieb aller im Bordnetz vorhandenen Batterien (z.B. einer 36V-Batterie und einer 12V-Batterie). Es legt die aus Batteriesicht optimale Batteriespannung fest und bestimmt die zugehörige Batterieleistung sowie das Entlade- und Ladepotential (maximale Lade- bzw. Entladeleistung). Die Leistungsangaben sind gewichtet, um die Dringlichkeit einer Ladung bzw. Entladung zu betonen. So wird z.B. bei kritischem Batterieladezustand mit hoher Priorität eine Ladeleistung gefordert, für sicherheitsrelevante Verbraucher kann jedoch noch Leistung aus der Batterie entnommen werden.

Der Generatormanager berechnet das Potential der elektrischen Leistungserzeugung: die momentan abgegebene Leistung, die maximal abgebbare Leistung bei aktueller Generatordrehzahl und eine Drehzahlinformation. Diese beschreibt den Drehzahlbereich in dem der Generator bei Vollerregung die maximale Leistung abgeben kann. Das mechanische Leistungspotential ist ebenfalls zu bestimmen: die momentan aufgenommene mechanische Leistung und die maximal abgebbare mechanische Leistung im Motorbetrieb (Boost des Fahrzeugantriebs; nur bei triebstranggekoppeltem Startergenerator). Ebenso ist die zu erwartende mechanische Leistung abzuschätzen, die zur Erzeugung einer vom Bordnetzmanager angeforderten elektrischen Leistung benötigt wird. Das Generatormanagement setzt den Auftrag nach Leistungserzeugung vom Bordnetzmanagement um, indem er die vorgegebene Sollspannung einregelt.

Ein Triebstrangmanagement ist für das Bordnetzmanagement erforderlich, da sich Bordnetz und Antrieb über den Generator gegenseitig beeinflussen: Der Antrieb bestimmt die aktuelle Generatordrehzahl und damit die momentan maximal erzeugbare elektrische Leistung. Der Generator hingegen stellt für den Antrieb eine zusätzliche mechanische Last dar. Das Drehzahlniveau des Antriebs und damit des Generators ist entscheidend für die längerfristige Leistungsbilanz und damit eine wichtige Größe bei der Auslegung des Bordnetzes. Für das Bordnetz sind folgende Größen des Antriebs wichtig: das Drehzahlpotential und das mechanische Leistungspotential. D.h. in welchem Umfang kann der Antrieb seine aktuelle Drehzahl variieren (bei konstanter Geschwindigkeit) bzw. kann der Antrieb die für den Generatorantrieb relevante mechanische Leistung bereitstellen. Dies ist besonders in Vollastphasen und bei zukünftigen Generatoren, die die erwähnten Leistungsanforderungen abdecken können, nicht selbstverständlich. Die Potentialangaben sind jeweils gewichtet, d.h. der Antrieb bewertet die für die Änderung von Drehzahl bzw. Leistung erforderlichen Maßnahmen hinsichtlich ihres Einflusses auf Wirkungsgrad, Emissionen etc. und legt abhängig vom Ergebnis Prioritäten für die einzelnen Poteniale fest.Andererseits beeinflußt das Bordnetz durch die Momentenrückwirkung auch den Antrieb. Der Antrieb kann daher Leistungsanforderungen an das Bordnetz stellen, die seinen Wirkungsgrad verbessern. Dazu gehört z.B. eine erhöhte Belastung des Verbrennungsmotors durch den Generator in Schwachlastphasen oder eine verringerte Belastung durch den Generator bei Vollast.

Die elektrischen Verbraucher fordern über das Verbrauchermanagement Leistung an. Gleichzeitig hat das Verbrauchermanagement die Aufgabe, die vom Bordnetzmanager zugeteilte Leistung auf die einzelnen Verbraucher zu verteilen.

Der Bordnetzmanager ist den zuvor genannten Komponenten übergeordnet. Er vergleicht die Leistungsanforderung der elektrischen Verbraucher mit dem Potential der Leistungserzeugung und legt unter Beachtung der Anforderungen der einzelnen Komponenten eine Strategie für die Leistungserzeugung und -nutzung fest. Die Leistungserzeugung ist dabei abhängig von der Priorität der Leistungsanforderung der elektrischen Verbraucher, der Priorität der Batterieanforderungen und der Priorität der Anforderungen vom Antrieb. Die zu beachtende Randbedingung ist dabei stets, daß die spezifizierten Spannungsgrenzen nicht verletzt werden und der Batterieladezustand nie unter einen kritischen Wert sinkt. Der Bordnetzmanager legt die einzustellende Generatorleistung, die zur Verfügung stehende Verbraucherleistung und die Batterieleistung fest und fordert vom Antrieb bei Bedarf ein verändertes Drehzahlniveau. Er kommuniziert zum Antrieb die zu erwartende Belastung durch den Generator (load response) bevor er den Auftrag zur elektrischen Leistungserzeugung gibt. Dadurch kann sich der Motor auf dynamische Laständerungen vorbereiten. Danach gibt er den Auftrag zur Leistungsbereitstellung und Leistungsabnahme. Aus der zugeteilten Batterieleistung ergibt sich die Batteriespannung. Z.B. ist beim 14V/42V-Bordnetz die Spannung der 36V-Batterie der Sollwert für den Generatorausgang und legt damit die Generatorleistung fest. Die 14V-Spannung wird über einen oder mehrere DC/DC-Wandler (Netzwandler, Batteriewandler) aus der 42V-Generatorspannung erzeugt. D.h. die Spannung der 14V-Batterie wird dem DC/DC-Batterie-Wandler als Ausgangsspannungswert vorgegeben (der Batteriewandler kann identisch mit dem Netzwandler sein). Die abzunehmende Verbraucherleistung wird dem Verbrauchermanagement zugeteilt, das die Verbraucher schaltet.

Damit ergeben sich folgende Schnittstellen vom Bordnetzmanager zu den Teilkomponenten:
zum DC/DC-Wandler:
   Abfrage von jedem Wandlertyp (z.B. Netzwandler, Batterie-wandler) bezüglich Wandlertemperatur T_{Wandler} (wird durch Messung ermitlet) unter gleichzeitiger Mitteilung der Maximaltemperatur (Halbleitergrenztemperatur) T_{grenz} laut Datenblatt und des aktuellen, gemessenen Wandlerstroms I_{Wandler}. Als Auftrag die Vorgabe der Ausgangsspannung U_{wandler_out} sowohl für Netzwandler als auch für Batteriewandler (falls vorhanden). Die Ausgangsspannung wird vom Bordnetzmanager z.B. unter Berücksichtigung der einzustellenden Batteriespannung bestimmt.
zum Verbrauchermanagement:
   Anforderung der Verbraucherleistung P_{v_Forderung}, deren Größe z.B. aus Festwerten, die den einzelenen Verbraucher zugeordnet sind, bestimmt wird.
   Die Abfrageschnittstelle stellt das Zuschalt-Potential (P_{v_pot}) der Verbraucher dar, welches aus Tabellenwerten durch Summation der einzelnen nicht aktiven Verbrauchern gewonnen wird.
   Eine weitere Abfrageschnittstelle ist Abfrage, wieviel der vorläufig zugeteilten (aufgeteilt nach Nenn- und Spitzenleistung) Leistung verwertet werden kann (P_{v_verwert}). Auch diese wird aus einer Tabelle bestimmt. Die umfaßt in einem Ausführungsbeispiel Komponenten für 12V- und 42V-Verbraucher. Dies ist nötig, falls keine kontinuierliche Leistungsverstellung möglich ist. Findet diese Abfrage nicht statt, teilt das Bordnetzmanagement Leistung zu, die nicht vebraucht wird, mit der Folge einer steigenden Bordnetzspannung.
   Die Auftragsschnittstelle bildet Pᵥ mit den Komponenten P_{12V}, P₄₂V. Über diese Schnittstelle übermittelt der Bordnetzmanager dem Verbrauchermanagement Aufträge nach Einstellung (Abnahme) der Verbraucherleistung. Die Aufteilung der Leistung auf die einzelnen Verbraucher findet im Verbrauchermanagement statt.
Zum Generatormanagement:
   Der Bordnetzmanager frägt beim Generatormanagement das wie oben bestimmte Potential der Leistungserzeugung P_{gen_pot} ab. In dieser Abfrage sind z.B. folgende Komponenten umfaßt: die aktuell erzeugte gemessenen elektrische Leistung Pᵢₛₜ und die maximal erzeugbare Leistung Pₘₐₓ. Dieser Wert ist drehzahlabhängig. Die maximal erzeugbare Leistung wird angegeben für die einstellbare Generatordrehzahl, die eine Funktion der Drehzahl des Antriebs und der Übesetzung zwischen Antrieb und Generator ist. Es wird also eine Maximalleistung bei der Generatoristdrehzahl, der maximal und der minimal möglichen Drehzahl angegeben. Außerdem geht eine mögliche Generator-übererregung in die maximale Leistung ein. Das Generatormanagement entscheidet dabei selbständig über die Boostfähigkeit des Generators. Eine Unterteilung des Leistungswerts in verschiedene Klassen ist denkbar, z.B. wirkungsgradoptimale Leistungserzeugung, leistungsoptimale Leistungserzeugung, zeitlich begrenzt mögliche Leistungserzeugung aufgrund des thermischen Generatorzustands (Übererregung). Eine Randbedingung des Leistungspotentials ist die Zeit, die benötigt wird, um die Leistung zur Verfügung zu stellen.
   Ferner wird der mechanischen wie oben bestimmte Leistungsbedarfs (P_{mech}) des Generators bei vorgegebener zu erzeugender elektrischer Leistung abgefragt. Bei Fahrzeugen mit triebstranggekoppeltem Starter-Generatoren oder Generatoren, die im motorischen Betrieb den Fahrzeugantrieb verstärken oder ersetzen können, ist eine Erweiterung der Schnittstelle erforderlich. P_{mech} ist dann auch die Leistung bei Motorbetrieb der elektrischen Maschine bei vorgegebener Drehzahl. P_{mech} ist in diesem Fall negativ (die elektrische Maschine gibt Leistung ab).
   Die Auftragsbeziehung zwischen Bordnetz und Generator stellt der Auftrag an den Generator nach Leistungserzeugung (P_{gen}) dar. Diese Schnittstelle definiert eine Ausgangsspannung für den Generator, die als Sollspannung der Generatorsteuerung vorgegeben wird. D.h. die Umrechnung der zu erzeugenden Leistung in eine entsprechende Spannung kann auch im Bordnetzmanager stattfinden. Diese Schnittstelle ändert sich dann in eine Spannungsschnittstelle U_{gen_out}.
Zum Triebstrangmanager:
   Als Anforderungsbeziehung zwischen Bordnetz und Triebstrang ist die Anforderung einer mechanischen Leistung P_{BN}, z.B. zur Warmlaufunterstützung (höhere Last) oder Entlastung beim Beschleunigen, an den Bordnetzmanager vorhanden. Über die Zuteilung der angeforderten Leistung entscheidet der Bordnetzmanager. Die Leistung wird hauptsächlich über den Generator eingestellt (mechanische Rückkopplung der elektrischen Leistungserzeugung). Bei Fahrzeugen mit möglicher Antriebsunterstützung durch motorischen Betrieb des Generators ist dies auch die Anforderung einer unterstützenden Leistung bei vorgegebener Drehzahl (entspricht einer Momentenforderung). In diesem Fall ist jedoch eine weitere Schnittstelle vorzusehen: die Potentialabfrage des Antriebs an das Bordnetz, z.B. das mechanisches Antriebspotential des Generators bei vorgegebener Drehzahl P_{BN_P}.

Die Abfragebeziehung stellt die Abfrage des Potentials der Leistungserzeugung des Antriebs (P_{Antrieb_max}) durch den Bordnetzmanager dar. Das Potential ist die maximale Leistung des Antriebs, die für die elektrische Leistungserzeugung zur Verfügung steht und wird aus einem Kennfeld gewonnen. Randbedingung ist dabei jeweils eine der Generatordrehzahl entsprechende Größe. Beim Ziel einer Momentenänderung wird die maximale Leistung bei konstanter Generatordrehzahl abgefragt, ist eine Drehzahländerung das Ziel, so daß die elektrische Leistungserzeugung verbessert wird, wird die maximale Leistung bei Änderung der Drehzahl übermittelt. Die Antwort auf diese Abfrage enthält zudem die Zeit, in der das Potential zur Verfügung gestellt werden kann.

Eine weitere Anforderungsbeziehung ist P_{Antrieb}. Sie repräsentiert die Anforderung nach Einstellung einer mechanischen Leistung für die elektrische Leistungserzeugung. Als Randbedingung ist die Ursache der Leistungsforderung mitzuteilen: Leistungsänderung durch Drehzahländerung oder Leistungsänderung durch Momentenänderung (bei konstanter Drehzahl).

### Zum Batteriemanager:

Als Abfragebeziehung ist vorhanden die Abfrage nach elektrischem Leistungspotential P_{bat_pot} der Batterie (n) und zugehöriger Batteriespannung(en), sowohl für Ladung als auch Entladung, d.h. Aufnahmeleistung bzw. Abgabeleistung. Das Potenial wird abhängig von der maximalen Ladeleistung und der Ladespannung, bzw. der maximalen Entladeleistung und Entladespannung gebildet. Ferner ist als Abfragebeziehung die Abfrage nach Wunschspannung(en) aus Batteriesicht U_{batopt} und zugehörige Leistung P_{batopt} vorgesehen. Die Spannung ist abhängig von der Lade-/Entladestrategie und von die Lebensdauer beeinflussenden Faktoren.

Die beschriebenen Kompontenen sind dabei Softwareteile zur Verwaltung und Steuerung der Hardwareteile wie Generator, Batterie, DC/DC-Wandler.

## Patentansprüche

1. Verfahren zur Energieverteilung für ein Kraftfahrzeug mit einem Triebstrang und einem Bordnetz mit wenigstens einer Batterie und wenigstens einem Generator, wobei eine Steuerstruktur eingesetzt wird, die aus einer übergeordneten Komponente und dieser untergeordneten Komponenten des wenigstens einen Generators und der wenigstens einen Batterie besteht, wobei zwischen der übergeordneten Komponente und den untergeordneten Komponenten vorgegebene Schnittstellen mit vorgegebenen Kommunikationsbeziehungen vorhanden sind, wobei die Steuerstruktur in eine Gesamtfahrzeugstruktur eingebettet ist, in der die übergeordnete Komponente mit einem Fahrzeugkoordinator kommuniziert und die übergeordnete Komponente die Anforderungen des Fahrzeugkoordinators an das Bordnetz umsetzt, wobei die übergeordnete Komponente bei der Umsetzung auch den Triebstrang mit berücksichtigt, indem die übergeordnete Komponente mit einer den Triebstrang repräsentierenden Komponente über eine Schnittstelle mit vorgegebenen Kommunikationsbeziehungen in Verbindung steht und als allgemeine Kommunikationsbeziehungen der Gesamtfahrxeugstruktur Anforderungen (PeV!), die von der angeforderten Komponente erfüllt werden sollten, Abfragen (P_{Potential}?), die von der abgefragten Komponente beantwortet werden müssen und Aufträge (Pel, PeV, U_{Soll}), die von der beauftragten Komponente erfüllt werden müssen, vorgegeben sind, wobei zwischen der untergeordneten Komponente des wenigstens einen Generators und der übergeordneten Komponente als Abfrage das Potential zur Leistungserzeugung des Generators (P_{Potential}?, P_{gen-pot}?) und als Auftrag die einzustellende Leistung bzw. Spannung (U_{Soll}, P_{mech}, P_{gen}) übermittelt wird, zwischen der untergeordneten Komponente der wenigstens einen Batterie und der übergeordneten Komponente als Abfrage das elektrische Leistungspotential der Batterie (P_{Potential}?, P_{bat-pot}?) übermittelt wird und zwischen der den Triebstrang repräsentierenden Komponente und der übergeordneten Komponente als Anforderung eine Forderung mechanischer Leistung (P_{BN}. P_{Antrieb}) übermittelt wird.

2. Verfahren nach Anspruch 1, **dadurch gekennzeichnet, dass** das abgefragte Potential der Leistungserzeugung (P_{Potential}?, P_{gen-pot}?) die aktuell erzeugte elektrische Leistung (Pᵢₛₜ) des Generators und die maximal erzeugbare Leistung (Pₘₐₓ) umfasst.

3. Verfahren nach einem der vorhergehenden Ansprüche, **dadurch gekennzeichnet, dass** als Abfrage von der übergeordneten Komponente zur Komponente Generator der mechanische Leistungsbedarf des Generators (P_{mach}?, P_{mech_Potential}?) übermittelt wird.

4. Verfahren nach einem der vorhergehenden Ansprüche, **dadurch gekennzeichnet, dass** als Abfrage von der übergeordneten Komponente zur Komponente Batterie die Wunschspannung (U_{batopt}?) und die Wunschleistung (P_{batopt}?) der Batterie übermittelt wird.

5. Verfahren nach einem der vorhergehenden Ansprüche, **dadurch gekennzeichnet, dass** als Komponente wenigstens ein DG/DG-Wandler vorgesehen ist, zwischen dem und der übergeordneten Komponente als Auftrag die Ausgangsspannung des Wandlers (Uₒᵤₜ, U_{wandleroui}) und als Abfrage das Leistungspotential (P_{Potential}?) übermittelt wird.

6. Verfahren nach Anspruch 5, **dadurch gekennzeichnet, dass** anstelle der Abfrage des Leistungspotential Wandlerstrom (I_{Wandler}?), Wandlertemperatur (T_{Wandler}?) und Grenztemperatur (T_{Grenz}?) abgefragt werden.

7. Verfahren nach einem der vorhergehenden Ansprüche, **dadurch gekennzeichnet, dass** als Komponente wenigstens ein Regler der Bordnetzspannung (Spannungsregler) vorgesehen ist, zwischen dem und der übergeordneten Komponente als Auftrag die Sollspannung (U_{Soll}) und als Anforderung vom Regler zur übergeordneten Komponente die elektrische Leistung (PeV?) übermittelt wird.

8. Verfahren nach einem der vorhergehenden Ansprüche, **dadurch gekennzeichnet, dass** als Komponente ein Verbrauchermanagement vorgesehen ist, welche von der übergeordneten Komponente Verbraucherleistung anfordert (Pv_{Forderung}), bei der die übergeordnete Komponente das Zuschaltpotential (Pvₚₒₜ?) der Verbraucher abfragt und als Auftrag die einzustellende Verbraucherleistung (Pv) übermittelt.

9. Verfahren nach einem der vorhergehenden Ansprüche, **dadurch gekennzeichnet, dass** als den Triebstrang repräsentierende Komponente ein Triebstrangmanagement vorgesehen ist, welche bei der übergeordneten Komponente die mechanische Leistung anfordert (P_{BN}), wobei von der übergeordneten Komponente das Potential der Leistungserzeugung des Antriebs (P_{Antrieb_max}?) abgefragt und von der übergeordneten Komponente eine einzustellende mechanische Leistung (P_{Antrieb}) als Auftrag übermittelt wird.

10. System zur Energieverteilung für ein Kraftfahrzeug mit einem Triebstrang und einem Bordnetz mit wenigstens einer Batterie und wenigstens einem Generator, wobei eine Steuerstruktur eingesetzt wird, die aus einer übergeordneten Komponente und dieser untergeordneten Komponenten des wenigstens einen Generators und der wenigstens einen Batterie besteht, wobei zwischen der übergeordneten Komponente und den untergeordneten Komponenten vorgegebene Schnittstellen mit vorgegebenen Kommunikationsbeziehungen vorhanden sind, wobei die Steuerstruktur in eine Gesamtfahrzeugstruktur eingebettet ist, in der die übergeordnete Komponente mit einem Fahrzeugkoordinator kommuniziert und die übergeordnete Komponente die Anforderungen des Fahrzeugkoordinators an das Bordnetz umsetzt, wobei die übergeordnete Komponente bei der Umsetzung auch den Triebstrang mit berücksichtigt, indem die übergeordnete Komponente mit einer den Triebstrang repräsentierenden Komponente über eine Schnittstelle mit vorgegebenen Kommunikationsbeziehungen in Verbindung steht und als allgemeine Kommunikationsbeziehungen der Gesamtfahrzeugstruktur Anforderungen (PeV!), die von der angeforderten Komponente erfüllt werden sollten, Abfragen (P_{Potential}?), die von der abgefragten Komponente beantwortet werden müssen und Aufträge (Pel, PeV, U_{Soll}), die von der beauftragten Komponente erfüllt werden müssen, vorgegeben sind, wobei zwischen der untergeordneten Komponente des wenigstens einen Generators und der übergeordneten Komponente als Abfrage das Potential zur Leistungserzeugung des Generators (P_{Potential}?, P_{gen-pot}?) und als Auftrag die einzustellende Leistung bzw. Spannung (U_{Soll}, P_{mech}, P_{gen}) übermittelt wird, zwischen der untergeordneten Komponente der wenigstens einen Batterie und der übergeordneten Komponente als Abfrage das elektrische Leistungspotential der Batterie (P_{Potential}?, P_{bat-pot}?) übermittelt wird und zwischen der den Triebstrang repräsentierenden Komponente und der übergeordneten Komponente als Anforderung eine Forderung mechanischer Leistung (P_{BN,}P_{Antrieb}) übermittelt wird.

## Claims

1. Method for distributing energy for a motor vehicle having a drive train and an on-board electrical system with at least one battery and at least one generator, with a control structure being used which comprises a superordinate component and components, which are subordinate to this, of the at least one generator and the at least one battery, with predefined interfaces with predefined communication relationships being present between the superordinate component and the subordinate components, with the control structure being embedded in an overall vehicle structure in which the superordinate component communicates with a vehicle coordinator and the superordinate component transfers the requests of the vehicle coordinator to the on-board electrical system, with the superordinate component also taking the drive train into account during the transfer by the superordinate component being connected to a component which represents the drive train via an interface with predefined communication relationships and, as general communication relationships of the overall vehicle structure, requests (PeV!) which are to be met by the component at which the requests are directed, queries (Pₚₒₜₑₙₜᵢₐₗ?) which have to be answered by the component at which the queries are directed, and orders (Pel, PeV, Uₛₑₜ) which have to be fulfilled by the component at which the orders are directed are predefined, with the potential for power generation of the generator (Pₚₒₜₑₙₜᵢₐₗ?, P_{gen-pot}?) being transmitted as a query and the power or voltage (Uₛₑₜ, P_{mech}, P_{gen}) to be set being transmitted as an order between the subordinate component of the at least one generator and the superordinate component, the electrical power potential of the battery (Pₚₒₜₑₙₜᵢₐₗ?, P_{bat-pot}?) being transmitted as a query between the subordinate component of the at least one battery and the superordinate component, and a demand for mechanical power (P_{BN}, P_{drive}) being transmitted as a request between the component which represents the drive train and the superordinate component.

2. Method according to Claim 1, **characterized in that** the requested potential of the power generation (Pₚₒₜₑₙₜᵢₐₗ?, P_{gen-pot}?) includes the currently generated electrical power (P_{act}) of the generator and the maximum power (Pₘₐₓ) which can be generated.

3. Method according to either of the preceding claims, **characterized in that** the mechanical power requirement of the generator (P_{mech}?, P_{mech-potential}?) is transmitted as a query from the superordinate component to the component "generator".

4. Method according to one of the preceding claims, **characterized in that** the desired voltage (U_{batopt}?) and the desired power (P_{batopt}?) of the battery are transmitted as a query from the superordinate component to the component "battery".

5. Method according to one of the preceding claims, **characterized in that** at least one DC/DC converter is provided as the component, and the output voltage of the converter (Uₒᵤₜ, U_{converterout}) is transmitted as an order and the power potential (Pₚₒₜₑₙₜᵢₐₗ?) is transmitted as a query between the said DC/DC converter and the superordinate component.

6. Method according to Claim 5, **characterized in that** the converter current (I_{converter}?), converter temperature (T_{converter}?) and limit temperature (Tₗᵢₘᵢₜ?) are queried instead of querying the power potential.

7. Method according to one of the preceding claims, **characterized in that** at least one regulator of the on-board electrical system voltage (voltage regulator) is provided as the component, and the setpoint voltage (Uₛₑₜ) is transmitted as an order between the said regulator and the superordinate component, and the electrical power (PeV!) is transmitted as a request from the regulator to the superordinate component.

8. Method according to one of the preceding claims, **characterized in that** a load management system is provided as the component and requests (Pv_{request}) the load power from the superordinate component, in the case of which the superordinate component queries the switch-on potential (PVₚₒₜ?) of the loads and transmits the load power (Pv) to be set as an order.

9. Method according to one of the preceding claims, **characterized in that** a drive train management system is provided as the component which represents the drive train and requests (P_{BN}) the mechanical power from the superordinate component, with the potential of the power generation of the drive (P_{drive_max}?) being queried by the superordinate component and a mechanical power (P_{drive}) to be set being transmitted as an order by the superordinate component.

10. System for distributing energy for a motor vehicle having a drive train and an on-board electrical system with at least one battery and at least one generator, with a control structure being used which comprises a superordinate component and components, which are subordinate to this, of the at least one generator and the at least one battery, with predefined interfaces with predefined communication relationships being present between the superordinate component and the subordinate components, with the control structure being embedded in an overall vehicle structure in which the superordinate component communicates with a vehicle coordinator and the superordinate component transfers the requests of the vehicle coordinator to the on-board electrical system, with the superordinate component also taking the drive train into account during the transfer by the superordinate component being connected to a component which represents the drive train via an interface with predefined communication relationships and, as general communication relationships of the overall vehicle structure, requests (PeV!) which are to be met by the component at which the requests are directed, queries (Pₚₒₜₑₙₜᵢₐₗ?) which have to be answered by the component at which the queries are directed, and orders (Pel, PeV, Uₛₑₜ) which have to be fulfilled by the component at which the orders are directed are predefined, with the potential for power generation of the generator (Pₚₒₜₑₙₜᵢₐₗ?, P_{gen-pot}?) being transmitted as a query and the power or voltage (Uₛₑₜ, P_{mech}, P_{gen}) to be set being transmitted as an order between the subordinate component of the at least one generator and the superordinate component, the electrical power potential of the battery (Pₚₒₜₑₙₜᵢₐₗ?, P_{bat-pot}?) being transmitted as a query between the subordinate component of the at least one battery and the superordinate component, and a demand for mechanical power (P_{BN}, P_{drive}) being transmitted as a request between the component which represents the drive train and the superordinate component.

## Revendications

1. Procédé de distribution d'énergie dans un véhicule automobile comportant une ligne de transmission et un réseau électrique embarqué ayant au moins une batterie et au moins un générateur, selon lequel on utilise une structure de commande comprenant un composant subordonné et un composant sous-bordonné d'au moins un générateur et d'au moins une batterie,
entre le composant subordonné et le composant sous-bordonné il y a des interfaces avec des relations de communication prédéfinies,
la structure de commande étant intégrée dans une structure globale du véhicule dans laquelle le composant subordonné communique avec un coordinateur de véhicule et le composant subordonné convertit les requêtes du coordinateur du véhicule au réseau embarqué,
le composant subordonné, lors de la conversion, tient compte de la ligne de transmission en ce que le composant subordonné communique avec un composant représentant la ligne de transmission par une interface avec des relations de communication prédéfinies et les relations de communication générales, de l'ensemble de la structure du véhicule, prédéfinies sont les requêtes (PeV !) qui doivent être remplies par le composant requérant, les interrogations (Pₚₒₜₑₙₜᵢₐₗ ?), qui doivent recevoir une réponse du composant interrogé et les missions (Pel, PeV, Uₛₒₗₗ) qui doivent être remplies par le composant missionné,
entre le composant subordonné d'au moins un générateur et le composant subordonné, on transmet comme interrogation le potentiel pour limiter la puissance du générateur (Pₚₒₜₑₙₜᵢₐₗ ?, P_{gen-pot} ?) et comme mission, la puissance à régler ou la tension à régler (U_{Soll}, P_{mech} P_{gen}), on transmet entre le composant sous-bordonné d'au moins une batterie et le composant subordonné, la puissance électrique potentielle de la batterie (Pₚₒₜₑₙₜᵢₐₗ ?, P_{bat-pot} ?) et entre le composant représentant la ligne de transmission et le composant subordonné, comme requête on transmet la demande de puissance mécanique (P_{BN}, P_{Antrieb}).

2. Procédé selon la revendication 1,
**caractérisé en ce que**
la requête concernant le potentiel de génération de puissance (Pₚₒₜₑₙₜᵢₐₗ ?, P_{gen-pot} ?) comprend la puissance électrique actuellement générée par le générateur (Pᵢₛₜ) et la puissance maximale qu'il est possible de générer (Pₘₐₓ).

3. Procédé selon l'une des revendications précédentes,
**caractérisé en ce que**
l'interrogation transmise du composant subordonné vers le composant générateur, est la demande de puissance mécanique du générateur (P_{mech} ?, P_{mech-Potential} ?).

4. Procédé selon l'une des revendications précédentes,
**caractérisé en ce que**
comme requête du composant subordonné vers le composant batterie, on transmet la tension souhaitée (U_{batopt} ?) et la puissance souhaitée (P_{batopt} ?) de la batterie.

5. Procédé selon l'une des revendications précédentes,
**caractérisé en ce que**
comme composant, il y a au moins un convertisseur continu/continu et on échange entre celui-ci et le composant subordonné, comme mission, la tension de sortie du convertisseur (Uₒᵤₜ, U_{wandlerout}) et comme requête, le potentiel de puissance (Pₚₒₜₑₙₜᵢₐₗ ?).

6. Procédé selon la revendication 5,
**caractérisé en ce qu'**
à la place de la requête du potentiel de puissance, on demande le courant de convertisseur (I_{wandler} ?), la température du convertisseur (T_{wandler} ?) et la température limite (T_{Grenz} ?).

7. Procédé selon l'une des revendications précédentes,
**caractérisé en ce que**
comme composant on a au moins un régulateur de la tension de réseau embarqué (régulateur de tension) et entre celui-ci et le composant subordonné, on transmet comme mission, la tension de consigne (U_{Soll}) et comme demande du régulateur au composant subordonné, la puissance électrique (PeV ?).

8. Procédé selon l'une des revendications précédentes,
**caractérisé en ce que**
comme composant, on a une gestion de consommateur qui demande au composant subordonné la puissance des consommateurs (Pv_{Forderung}) pour laquelle le composant subordonné demande le potentiel complémentaire (PVₚₒₜ ?) des consommateurs et transmet comme mission la puissance de consommateur à régler (Pv).

9. Procédé selon l'une des revendications précédentes,
**caractérisé en ce que**
comme composant représentant la ligne de transmission, on a la gestion de la transmission qui demande au composant subordonné, la puissance mécanique requise (P_{BN}), et le composant subordonné demande le potentiel de génération que peut fournir l'entraînement (P_{Antrieb} max ?) et le composant subordonné transmet comme mission, la puissance mécanique à régler (P_{Antrieb}).

10. Système de distribution d'énergie dans un véhicule automobile comportant une ligne de transmission et un réseau électrique embarqué ayant au moins une batterie et au moins un générateur,
selon lequel on utilise une structure de commande comprenant un composant subordonné et un composant sous-bordonné d'au moins un générateur et d'au moins une batterie,
entre le composant subordonné et le composant sous-bordonné il y a des interfaces avec des relations de communication prédéfinies,
la structure de commande étant intégrée dans une structure globale du véhicule dans laquelle le composant subordonné communique avec un coordinateur de véhicule et le composant subordonné convertit les requêtes du coordinateur du véhicule au réseau embarqué,
le composant subordonné, lors de la conversion, tient compte de la ligne de transmission en ce que le composant subordonné communique avec un composant représentant la ligne de transmission par une interface avec des relations de communication prédéfinies et les relations de communication générales, de l'ensemble de la structure du véhicule, prédéfinies sont les requêtes (PeV !) qui doivent être remplies par le composant requérant, les interrogations (Pₚₒₜₑₙₜᵢₐₗ ?), qui doivent recevoir une réponse du composant interrogé et les missions (Pel, PeV, Uₛₒₗₗ) qui doivent être remplies par le composant missionné,
entre le composant subordonné d'au moins un générateur et le composant subordonné, on transmet comme interrogation le potentiel pour limiter la puissance du générateur (Pₚₒₜₑₙₜᵢₐₗ ?, P_{gen-pot} ?) et comme mission, la puissance à régler ou la tension à régler (U_{Soll}, P_{mech} Pgen), on transmet entre le composant sous-bordonné d'au moins une batterie et le composant subordonné, la puissance électrique potentielle de la batterie (Pₚₒₜₑₙₜᵢₐₗ ?, P_{bat-pot} ?) et entre le composant représentant la ligne de transmission et le composant subordonné, comme requête on transmet la demande de puissance mécanique (P_{BN}, P_{Antrieb}).
